# EUROPEAN PATENT APPLICATION

(11) **EP 4 530 905 A1**
(43) Date of publication of application: **02.04.2025**
(21) Application number: 23200439.0
(22) Date of filing: 28.09.2023
(51) Int. Cl.: G06F 21/62, G06Q 10/10, G06F 21/64

(54) **SYSTEM AND METHOD FOR SELECTIVE DISCLOSURE USING A DEPOSITARY AND A SELECTIVE DISCLOSURE FUNCTION MODULE**

(71) Applicant: Siemens Aktiengesellschaft, 80333 München (DE)
(72) Inventor: Kasinathan, Prabhakaran, 81549 München (DE); Seltzsam, Stefan, 85653 Aying (DE); Wimmer, Martin, 85579 Neubiberg (DE)
(74) Representative: Siemens Patent Attorneys

(57) **Abstract**

A computer-implemented method and system for selectively disclosing information, which facilitates secure data management by enabling the generation and signing of tokens, containing both publicly accessible data and confidential information masked by a mask obtained using a unique salt. Holders, upon receipt of these tokens, can register and store them, along with the original unmasked information, in a Selective Disclosure Depositary (SD-Depositary). This Depositary not only safeguards the confidential data but also manages and mediates access to it based on predefined rights and access controls. When external entities, known as verifiers, seek access to this confidential data, the SD-Depositary, acting as a neutral entity, evaluates access requests based on the predefined criteria. Optional features allow for the dynamic adjustment of access permissions, real-time notifications to holders regarding access attempts, and a neutral arbitration mechanism in case of disputes. The proposed method and system can be further improved with the use of a selective disclosure function module. This module, equipped with dedicated interfaces and storing the data in a way that is kept protected from the SD-Depositary, streamlines the configuration management for selective disclosure and employs a policy decision point for meticulous evaluation of access rights.

## Description

### Field of the invention

The present invention relates to the fields of data security, management, and selective information disclosure. More particularly, the invention addresses challenges inherent in decentralized data control structures, proposing a centralized approach to manage selective data disclosure.

Selective disclosure, within the broader context of digital rights management and data privacy, refers to the capability of revealing specific segments of data while concurrently withholding other portions to maintain them confidential. This capability is important in various sectors, including but not limited to finance, healthcare, manufacturing, and supply chain operations, where information sharing needs are often juxtaposed against imperatives for data privacy and protection and/or security.

In addition to the primary objective of facilitating selective data disclosure, the invention also relates to policy enforcement, decision-making, data auditing, and trust management. Indeed, the invention also has the advantage of not only ensuring effective data sharing mechanisms but also emphasizing the integrity, longevity, and trustworthiness of the shared data.

By integrating concepts from data governance, cryptographic tokenization, and trust management, the invention proposes a novel architecture and system, termed as the Selective Disclosure Depositary (SD-Depositary). This Depositary system serves as a mediator, or more precisely, a trusted third party (TTP), positioned to manage and control access to sensitive data, ensuring its availability and integrity even in complex, evolving environments with changing stakeholder dynamics.

In addition, this Depositary system can be further equipped with a selective disclosure function module for improving trust towards the trusted third-party itself.

### Background of the invention

In cross-organizational business processes, the ability to share and verify data among partners is of extreme importance, given the increased emphasis on authenticity, transparency, and accountability. The simplest way to share data among partners was to create a group for confidentially exchanging data among the members of this group. This simple approach had the downsides that it was not capable of addressing situations where data needs to be shared selectively among the partners.

A traditional solution has often involved direct interactions between a so-called "Holder" (the party possessing the data) and a so-called "Verifier" (the party requiring validation of the data). Known as selective disclosure, this approach allows the Holder to share specific portions of the data, keeping other parts concealed. The underlying premise is to ensure that proprietary or sensitive information is shared only when absolutely necessary.

For instance, in complex supply chains, a Holder might need to demonstrate the authenticity or compliance of a product without revealing its proprietary specifications. Another scenario can be observed in financial exchanges, where a party might need to validate having adequate funds for a transaction without disclosing the exact amount.

However, as industries evolve and processes become more intricate, the direct Holder-Verifier interaction model for selective disclosure reveals its limitations. For real-time or immediate exchanges, this model works efficiently. Yet, there are numerous scenarios where the information needs to be authenticated at one point, but the comprehensive data might only be required at a later stage.

For instance, in a scenario where, during the manufacturing phase, a Holder and Verifier have a trusted relationship. At this time, the Verifier might only need to validate the content of a provided document or token. However, months or year down the line, if a legal dispute arises, the Verifier might require access to the concealed data. If the Holder is, for any reason, unable or unwilling to provide this access, the situation becomes complex. This could be due to reasons such as the Holder going out of business, other unforeseen circumstances, or simply because of unwillingness to cooperate.

Similar challenges also arise when a Verifier, after verifying information from a primary Holder, acts as a secondary Holder to share this data with another party. If the primary Holder becomes inaccessible, the secondary Holder might face challenges in providing necessary proofs to the new Verifier.

These situations emphasize a distinct gap in the traditional model: the reliance on the constant availability and willingness of the Holder to share concealed data on-demand. It brings forth the need for a solution that balances the principles of decentralized, self-sovereign data architectures while ensuring that concealed data can be accessed reliably when needed, even if the original Holder is not available.

### Summary of the invention

This invention introduces a Selective Disclosure Depositary (SD-Depositary), which is a mechanism designed for adequate handling and management of proprietary information in decentralized systems. It operates as an intermediary, serving crucial functions that both simplify and fortify the process of data disclosure. The SD-Depositary is built to act on behalf of a data Holder, facilitating selective information disclosure. This is achieved by leveraging specially crafted documents such as tokens that encapsulate both visible and hidden portions of data. When a Holder engages with an Issuer to generate such a token, what results is a document that only reveals partial, redacted content, allowing the holder to maintain a degree of data confidentiality over the data that is transferred.

Once acquired, the Holder proceeds to register this document or token with the SD-Depositary. Alongside the token, the Holder also entrusts the SD-Depositary with the plain text version of the data (in fact a tuple with the replaced information serving as a mask and the plain text version of the original information that needed to be kept secret). This positions the SD-Depositary as a repository of both the protected and full versions of proprietary data.

For subsequent interactions, the SD-Depositary acts as both a policy enforcement and a decision point (PEP, PDP). When a Holder shares a document or token with a Verifier, the Verifier initially gets to view only the publicly readable information in the certified document. However, in scenarios where the Verifier needs deeper access, possibly to the hidden segments of data, he can request this from the SD-Depositary. The decision to grant this access is then taken by the SD-Depositary, which consults policies specified by the Holder or can even request the holder.

In some embodiment, the information on the SD-Depositary can be made inaccessible to the SD-Depositary itself by implementing a further function module supporting selective disclosure delegation in collaborative workflows. This solution increases the trust of Holders in delegating access to their confidential information.

Another advantage are the logging features of the SD-Depositary. Each access or request to data gets logged, positioning the SD-Depositary as a central log and audit instance, which is indispensable for traceability and accountability in data access procedures.

Furthermore, the utility of the SD-Depositary stretches to scenarios where data verification is of utmost importance. Indeed, upon data registration, the SD-Depositary can execute a validation process, ensuring that data integrity is maintained. In addition, the SD-Depositary can also inform or actively engage the Holder when a Verifier seeks access, offering both passive and active involvement modalities for the Holder.

To summarize, the disclosed SD-Depositary not only streamlines data access but also elevates the robustness, traceability, and control mechanisms for proprietary data management in decentralized environments.

The details of one or more embodiments are set forth in the accompanying drawings and the description below. Other features will be apparent from the description and drawings, and from the claims.

### Brief description of the Drawings

- Fig. 1: is a diagram of a selective disclosure according to the prior art.
- Fig. 2: is a diagram of a selective disclosure using a SD-Depositary according to an embodiment of the present invention.
- Fig. 3: is a schema of a selective disclosure function module to be used in a selective disclosure method using a SD-Depositary according to an embodiment of the present invention.
- Fig. 4: is a diagram of a selective disclosure using a SD-Depositary and a selective disclosure function module according to an embodiment of the present invention.

### Detailed description of the invention

Hereinafter, the embodiments will now be described in detail with reference to the accompanying drawings. However, the disclosure cannot be limited to the embodiment in which the idea of the disclosure is presented, and another embodiment included within range of idea of another backward disclosure, or the present disclosure may be easily proposed by addition, change, deletion and the like of another element.

In cross-organizational business processes, information needs to be exchanged between partners. Considering the case of a supply chain as an illustrative but not limiting example, some information about products (e.g., in which country it was produced, the product carbon footprint) should be public and verifiable. However, details about suppliers and sub-suppliers that delivered materials and/or sub-components shall by default not be publicly accessible and remain for most partners in the supply chain confidential. Indeed, a manufacturer typically does not want to reveal information about its own suppliers to its customers (or even worst to the general public). Only to selected partners and/or under certain circumstances (e.g., dispute resolution that demands for the disclosure of information in legal proceedings) this corporate proprietary information shall be revealed to other partners. Ideally, part of the data should already be shared at an early stage with the public information to prevent fraud (e.g., always assign the "organic" label only to products where necessary legal actions are taken) and, e.g., loss of data due to an incident at the manufacturers site. Further, data needs to be retained, i.e., needs to be available and accessible at any point in time. Considering that companies / partners in a supply chain can also go out of business and disappear, it raises questions on the situations where this information needs to be available at a later point in time and the holder of the information is no longer in a situation to be asked or to provide this information. For example, a supplier of an OEM builds a product out of a component produced by the supplier and sells it to a customer. Assuming that the OEM and the customer are involved in a legal dispute and the supplier in the meantime has gone out of business or is no longer able/willing (e.g., different jurisdiction) to provide data to the OEM. To defend itself, the OEM would, however, need to provide (verifiable) information of the supplier to the customer. If at the time of manufacturing the product this information was available and the supplier shared it with the OEM but in a protected (not yet disclosed to the OEM) way, the situation would be solved. An advantage of this invention is to provide a system and approach that allows to make the data of the supplier accessible in a secured way to the OEM or legal entities (that can then provide proof to the customer) also at a later point in time in such a situation.

This is a function of the Depositary / depository that is presently described. It has the advantage that the system architecture foresees an entity (trusted third party) that can act as Depositary between holders of information and verifiers of information, securely store/retain verifiable data (provided by a holder) and control access to verifiable information for verifiers.

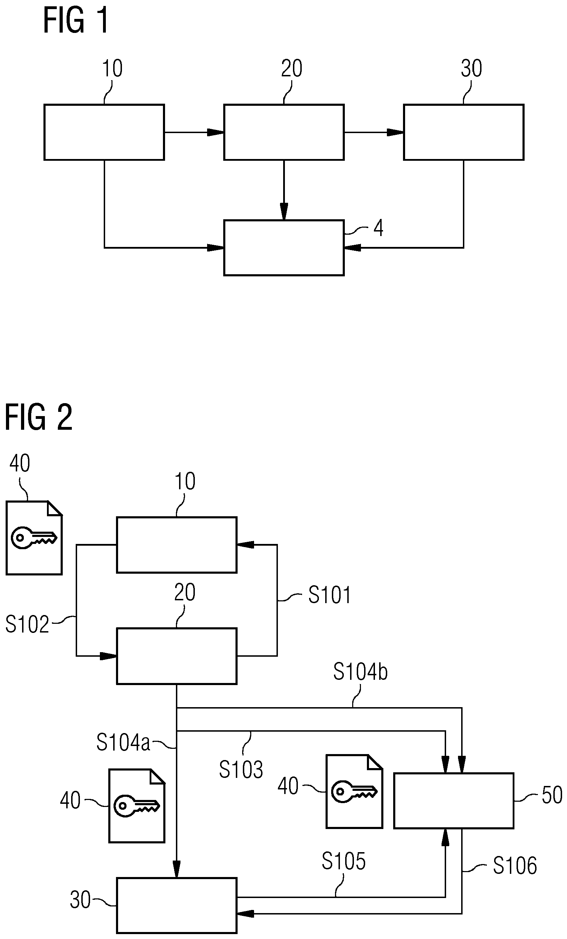

Indeed, conventionally, the selective disclosure of information in such a cross-organizational business process was performed in a method illustrated by Fig. 1. In this approach, data integrity (i.e., the functionality of being able to prevent and/or at least being able to identify data manipulations) and non-repudiation (i.e., the functionality of being able to identify the source of information or modifications) are ensured. This can be performed using known PKI technologies where an issuer of data signs using its private key. A verifier can verify using the public key of the issuer in order to validate that the data was provided by the issuer without modification. For instance, using an X.509 certificate, the public key can be associated with a person or legal entity. Examples are XML signatures or verifiable credentials (VC) which introduce the three roles of issuer 10, holder 20, and verifier 30. In the illustration of Fig. 1, an issuer 1 could be a certification authority. As an independent trusted certification authority, the issuer 10 issues a verifiable credential about for instance the carbon footprint (PCF) of a component that a subcontractor produces. The subcontractor, as holder 20, can provide the corresponding verifiable credential to an OEM, acting as a verifier 30, to which it delivers its component. The OEM can check the verifiable credential in a verifiable data registry 4, so that it can be proved that the provided information is trustworthy.

In such a case, implementing a selective disclosure can be done for instance using a so-called SD-JWT, or Selective Disclosure for JWTs (JSON Web Tokens). It represents a mechanism that enables tailored data sharing. JWTs are compact, URL-safe tokens primarily used to communicate claims between two entities. Comprising three integral components - the header, which identifies the token type and signing algorithm; the payload, containing claims or assertions and additional metadata; and the signature, which verifies the sender's authenticity and data integrity - JWTs traditionally offer transparent data presentation. However, with the advent of selective disclosure, it is now feasible to modulate this transparency. Rather than revealing the entire content of the JWT payload, selective disclosure allows for specific portions of the data to be shared, while others remain undisclosed. This ability to parse out sensitive or non-essential information ensures that the receiving party only accesses what is relevant to them, bolstering both privacy and data security in digital transactions.

For instance, in our illustrative example, the issuer 10 can create a SD-JWT for the holder 20 (the subcontractor) containing protected information about the specification of the component provided to the verifier 30 (the OEM). This could be illustrated by the following code:

```
 {
   "iss":"certifier-identity-https://example.com/cert_auth",
   "iat": 1516239022,
   "sub":"dfad2dd704e96b115bb97180adl;jansdkn",
   "pcf" : {
       "pcf_value":"50kg",
       "product_name":"Great Product ABC"
       "pcf_standard":"xyz"
       "_sd":[
  
 "fcfe6a7679101251328cbfe1ec1c75dfdc3906dc7e78edc144c949e660768416",
  
 "40ce7a8ae9e853f95745069e005c23352250c79cf75a297c2149dcf735d2049c",
  
 "dcc9a3c6e97fe6f927e7976d08020f228bf9409eeb160490d53ebb51f9c63e7b"
       ]
       "extended_use":"YES"
   },
   "_sd_alg":"sha-256"
 }JWS->signed by Certification Authority
```

It is visible that some data is public and in plain text, such as the PCF Value of 50kg. In that case, the verifier 30 (the OEM) or any other actor can see them for the start. On the other hand, information in the _sd field represents masked versions of the raw data. That is to say that the raw data (e.g., chip information) is taken together with a salt value (which is selected as a one random value, in other word a salt random value) and all this data is used as input for a hash function. To summarize, the masked data is a masked data obtained using this salt random value taken together with the raw data for replacing the original raw data.

If an actor such as the verifier 30 (the OEM) needs access to the raw information in plain text of the confidential field that have been masked, he can request it from the holder 20 (the subcontractor), which - if agreed - will provide the requested information separately. The following code lines illustrates what could be the information about the chip and RAM:

```
 disclosure for the CPU / vendor of the CPU
 "fcfe6a7679101251328cbfelec1c75dfdc3906dc7e78edc144c949e660768416"
 ["SALT_VALUE_CHIP", "chip", "Super powerful CPU-1234"]
  
 disclosure for memory chips used
 "40ce7a8ae9e853f95745069e005c23352250c79cf75a297c2149dcf735d2049c"
 ["SALT_VALUE_RAM", "ram", "Very Fast RAM"]
```

The verifier 30 can verify the correctness of the information provided based on the fact that the issuer 10 has evaluated the authenticity of the information before generating the token (that is to say both the original document sent with a mixture of transparent and masked data). In other words, in this approach, the information can be disclosed in a verifiable way.

However, such an approach comes with the disadvantage that it requires that the holder 20 can be asked to provide the second part of the information comprising the row data of the masked field.

Fig. 2 illustrates a diagram of a computer implemented method for selectively disclosing information according to the present invention, wherein it is ensured that the subsequent disclosure of the created information kept confidential can be performed at a later stage, with less dependency on the holder.

In a step S101, the holder 20 requests the issuer 10 to generate signed document or a token 40 in the present example. The token comprises public information available in plain text and confidential information that is protected by replacing it with a masked version. It can be done the way presented above for the method of Fig. 1 with a token compliant with SD-JWT.

In a step S102, the issuer 10 sends the document / token 40 to the holder 20 and the tuple mask/plain text of the masked data.

In a step 103, the holder 20 registers/stores both the token and the tuple with mask/plain text needed for selective disclosure in a SD-Depositary 50. That is to say that both the token comprising public and confidential information, and the second part of the information comprising the raw data of the fields masked in the token as illustrated in the method of Fig. 1, are stored in the SD-Depositary 50.

In a step S104, the holder 20 publishes the information for the verifier and manages access to it via a SD-Depositary. This step is performed by performing 2 parallel sub-steps. In step S104a, the holder 20 sends the token to a verifier 30. In step S104b, the holder 20 specifies the access rights for the verifier 30 on the side of the SD Depositary. At this stage, the verifier 30 can have access to public data in the document/token received.

To account for the cases where the verifier 30 might need access to the confidential data that is hidden/masked in the token, in a step S105, the verifier 30 requests access to confidential information from the SD-Depositary 50. The SD-Depositary can enforce the policy defined by the holder in step S104b. That is to say that the Depositary will check whether or not the holder 20 as specified that the verifier 30 can have access to the confidential data and under which conditions. In case the SD-Depositary 50 is authorized to provide the confidential information to the verifier 30, at step S106, the SD-Depositary 50 sends the second part of data corresponding to the row data that is masked in the token (the tuple mentioned above for instance) to the verifier 30 as a response to its request.

This method can also comprise additional steps for bringing additional functions.

In an optional step, when the holder 20 performs the registration of both the token and the second part of the data comprising raw data of the masked data, the SD-Depositary 50 can perform a validation process and accept the registration only in case these pieces of data can be successfully verified (i.e., they have been validly signed by the issuer 10).

In another optional step, when the holder 20 performs the registration of both the token and the second part of the data comprising raw data of the masked data, a confirmation of registration can be sent by the verifier 30 by the SD-Depositary 50.

In yet another optional step, when the verifier 30 request an access to the confidential data to the SD-Depositary 50, the SD-Depositary will send a message to the holder 20 to inform it that access to the confidential data has been requested or took place. In the case of sending a message to inform that access has been requested, this optional step can optionally further comprise a step of requesting the holder 20 by the SD-Depositary 50 to approve the access to the confidential data. In such a case the holder can send a response for accepting or refusing the request, and the SD-Depositary will act accordingly. Similarly, the request and validation can be performed by another entity, according to the policy defined in step 104b, such a tribunal or a supervisory authority.

To summarize, in such embodiments of the present invention, a system and method for selective disclosure of information/data are proposed. In this approach, the entity designated as the holder is involved during the initial dissemination of information/data, but less or not in the step of obtaining a confidential part of the information/data initially disseminated. Indeed, this approach is suited for use cases, such as during manufacturing phases, wherein data is acquired and safeguarded at a specific temporal instance (i.e., in most cases initially on the initiative of the holder), but subsequent processing or access to the confidential dataset might be postponed or perhaps deemed unnecessary. Challenges emerge when, at the time of solicitation of the confidential data, the Holder becomes incapacitated, for instance, due to cessation of operations, or displays reluctance in granting data access.

For illustration, consider intricate supply chains where disputes may arise. During manufacturing, a holder and a verifier might indeed operate as mutual confidantes. At such moment in time, the verifier may not necessarily require immediate access to confidential data but should be endowed with the capability to authenticate the content of a furnished token. However, should their rapport degrade in subsequent months or years, culminating in legal disputes, the verifier might need access to such data. Complications ensue if the holder is either incapacitated or disinclines to grant said access. In such predicaments, a Trusted Third Party (TTP), which might be the SD-Depositary, a judicial entity, or a supervisory authority can mediate, arbitrate, and examine the data sans complete disclosure.

A parallel scenario can be envisaged wherein the verifier, having used data provided by the holder for product development, subsequently assumes the holder's role to relay information to another verifier. In situations where the first holder becomes non-operational, but original verifier needs to provide evidential data to its client (second verifier) by providing access to raw data of the initially confidential data, the intermediation of a neutral entity is of great interest.

Consequently, the disclosed use of the SD-Depositary in such a system brings several advantages. Firstly, it facilitates access to privileged datasets over long-lasting processes, especially when certain collaborating entities might disappear. Secondly, it provides safeguards against potential unauthorized alterations or fraudulent manipulations of the data at subsequent points in time. Thirdly, it establishes a neutral and trusted intermediary for both the holder and the verifier. Fourthly, it reduces or can even remove the imperative for consistent holder engagement. Finally, the SD-Depositary's architecture can be used as a data backup repository.

However, this solution of providing confidential data to a third party in the form of the SD-Depositary may not be easily accepted by some holders which then partially lose control over the security of the data. This disclosed approach creates additional needs for the holders. Firstly, they might want to be able to alter the configuration (for instance by adding additional recipients/verifiers). Most importantly, they may want to ensure access to the information only to selected parties that is to say especially excluding a Depositary / trusted third party to have access to the data. In addition, they may be willing to introduce context aware constraints such as applying zero trust principle when a party requests access to the data. Indeed, a downside of the approach of the embodiment disclosed in Fig. 2 is that the holder must have a high level of trust towards the trusted third party in that for setting up the system it has to provide the disclosed information in plain text and the access control configuration/access control policy that are needed by the trusted third party to perform access control on the behalf of the holder by enforcing the access policy when a verifier request access to the disclosed information. To summarize, the holder must provide configuration data to the SD-Depositary in a way that disclosed information and access control policy are fully transparent/readable by the SD-Depositary. Therefore, in an advantageous embodiment of the present invention, a selective disclosure function module can be added such that the holder does not need to entrust the trusted third party with fully transparent/readable disclosed information and access control policy.

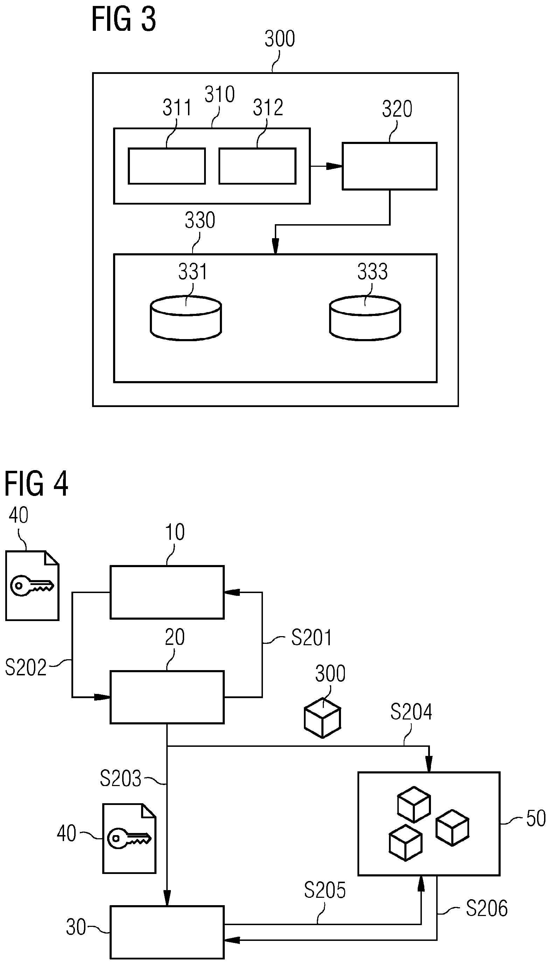

Fig. 3 illustrates such as selective disclosure function module 300 according to the present invention.

The selective disclosure function module 300 comprises interfaces 310, a policy decision point (PDP) 320 and data assets 330.

The interfaces 310 comprise two interfaces. An interface 311 for managing the configuration for the selective disclosure. It can be implemented in a way that only the holder is authorized to execute this interface. The configuration for the selective disclosure may take the form of a configuration for the selective disclosure data set which may define which recipient can have access to the second interface 312 for retrieving data. In that case, the identities of recipients could be specified for instance, via Decentralized Identifiers (DIDs) or public keys. The second interface 312 for accessing the data is an interface for retrieving the selectively disclosed information (i.e., the confidential information masked in the token). It is to be used by verifiers when they want to access the confidential data, and the configuration for the selective disclosure data set may define which verifier has access, and what are its access rights (i.e., to which part of the confidential data should it get access to).

The PDP 320 represents a function block which evaluates the access control policy defined by the configuration for the selective disclosure data set.

The data assets 330 in the module 300 comprises: the data 331 corresponding to the raw data of the confidential data masked in the token (for instance the tuple mentioned above) and the data 332 being the configuration for the selective disclosure data set.

Such a selective disclose function module 300 can be realized as a virtual machine instance. This allows making use of confidential computing offerings from side of cloud providers so that SD-Depositary, when being provided as a SaaS offering, can be set up in a way to accept such selective disclosure function modules and execute them in a trusted execution environment (TEE).

Fig. 4 illustrate a selective disclosure method using a SD-Depositary and a selective disclosure function module according to an embodiment of the present invention.

The first steps of the method are similar to those disclosed for the method of Fig. 2. That is to say that in a step S201, the holder 20 requests the issuer 10 to generate sign a document / token 40 and tuple. The token comprises public information available in plain text and confidential information that is protected by replacing it with the mask. In a step S202, the issuer 10 sends the token 40 and tuple to the holder 20.

However, after the reception of the token by the holder 20, the method differs from the one of Fig. 1.

In a step S203, the holder only sends the document / token 40 to the verifier 30, who can already verify the token itself but cannot yet have access to the content of the confidential data as it is masked by a mask in the document / token received.

In a step S204, the holder 20 registers / stores a corresponding selective disclosure function module 300 in the SD-Depositary 50 (that is to say corresponding to this token and tuple). The Depositary can be configured to execute the module 300 in a TEE.

To account for the cases where the verifier 30 might need access to the confidential data that is hidden/masked in the token received, in a step S205, the verifier 30 requests access to confidential information from the SD-Depositary 50 by invoking the second interface 312 for retrieving data of the corresponding module 300.

In a step S206, the SD-Depositary 50 acts as confidential computing platform, securely executing the introduced selective disclosure function module 300. If policy enforcement/evaluation succeeds, the protected confidential information is disclosed to the Verifier that can validate its authenticity/correctness based on the initially provided SD-JWT.

By this approach, the SD-Depositary 50 itself will never have access to the confidential data but acts as a computation provider, only, in that the selective disclosure function module 300 will be executed as a black-box.

In this specific embodiment using the selective disclosure module, the advantages discussed for the use of the SD-Depositary are maintained, whilst providing further advantages specific to the use of the selective disclosure function module instead of registering the token and raw data in the SD-Depositary. Firstly, the disclosure and access control enforcement are delegated to a third-party entity, effectively obviating the necessity to expose sensitive or confidential data to the said entity. This strategic maneuver augments the ease and efficiency of trust establishment with the Trusted Third Party (TTP), subsequently moderating testing prerequisites. Further, using a PDP in the selective disclosure function module provides a modular design and for instance can allow applying zero trust principles by means of including device and user/organization context information in the policy evaluation process. In addition, the selective disclosure function module is extensible. Indeed, it can be extended with standardized configuration interfaces and PEP (policy enforcement point), PDP (policy decision point), PIP (policy information point), and PAP (policy administration point) functionality. Also, the callback to external interfaces needed for access control enforcement can be integrated/linked. A log functionality can be added to support standardized logging and auditing.

Finally, through the access control configuration, the management and control of the selective disclosure function module itself can also be handed over to other entities (e.g., in the context of mergers and acquisitions or liquidations).

On a purely technical perspective, this approach also has the advantage of limiting the quantity of data transferred at each step of the processing whilst minimizing the size of the storage used for keeping the full information of the cross-organizational business process. Indeed, when each of the actors operates its own computer system which are in communication at each interface disclosed as steps in the diagram of Fig. 2 and Fig. 4, the quantity of data which is transferred at each interface and the quantity of data that needs to be saved in each actor computer system can be default optimized.

## Claims

1. A computer implemented method for selectively disclosing information, wherein the method comprises the steps of:
- sending (S101), by a holder (20) to an issuer (10), a request for certifying and partially masking data, where the request comprises original raw data and at least one indication of at least one part of the original raw data to mask;
- sending (S102), by the issuer (10) to the holder, a certified data package comprising:
a certified partially masked version of the data (40) comprising at least a part of the original raw data not masked and a part of the original raw data masked according to the at least one indication of at least a part of the original raw data to mask, and
a certified correspondence data comprising a correspondence between the part of original data masked and the original raw data corresponding to the part of data masked;
- registering (S103), by the holder (20) in a selective disclosure depositary (50), the certified data package;
- sending (S104a), by the holder (20) to a verifier (30), the certified partially masked version of the data (40);
- sending (s104b), by the holder (20) to the selective disclosure depositary (50), an access policy defining conditions of access for the verifier (30) to the correspondence data of the certified data package.

2. The method of claim 1, wherein the method further comprises the steps of:
- sending (S105) by the verifier (30) to the selective disclosure depositary (50), a request to access to the certified correspondence data of the certified data package;
- sending (s106) by the selective disclosure depositary (50) the certified correspondence data of the certified data package according to the access policy sent by the holder (20).

3. The method of claim 2, wherein the step of sending (s106) by the selective disclosure depositary (50) the correspondence data of the certified data package according to the access policy sent by the holder (20), comprises:
- checking whether or not the verifier (30) is authorized by the access policy to have access to the certified correspondence data of the certified data package;
- sending, by the selective disclosure depositary (50) the certified correspondence data of the certified data package if the access policy authorizes the verifier to have access to the certified data.

4. The method of any one of claims 1 to 3, wherein the masked data is a masked data obtained using a salt random value for replacing the original raw data of the at least one part indicated in the at least one indication.

5. The method of any one of claims 1 to 4, wherein the correspondence data is a tuple comprising data used as a mask to replace the original raw data masked and corresponding original raw data which has been replaced by the mask.

6. The method of any one of claims 1 to 5, wherein the method further comprises the step of sending registration confirmation to the verifier after the step of registering (S103), by the holder (20) in a selective disclosure depositary (50), the certified data package has been successfully performed.

7. The method of any one of claims 1 to 6, wherein the step of registering (S103), by the holder (20) in a selective disclosure depositary (50), the certified data package further comprises:
- validating, by the selective disclosure depositary (50), that the certified data package registered by the holder (20) is validly certified by the issuer (10) ;
- accepting the registration of the certified data package by the selective disclosure depositary (50) only after validation.

8. The method of any one of claims 1 to 7, wherein the selective disclosure depositary (50) acts as a neutral intermediary between the holder (20) and the verifier (30).

9. The method of any one of claims 1 to 8, wherein the identities of holder (20), the issuer (10) and the verifier (30) of the data are specified via Decentralized Identifiers, DIDs, or public keys.

10. The method of any one of claims 1 to 9, wherein the certified partially masked version of the data (40) is a selective disclosure JSON Web Token.

11. A computer implemented method for selectively disclosing information, wherein the method comprises the steps of:
- sending (S201), by a holder (20) to an issuer (10), a request for certifying and partially masking data, where the request comprises original raw data and at least one indication of at least one part of the original raw data to mask;
- sending (S202), by the issuer (10) to the holder, a certified data package comprising:
a certified partially masked version of the data (40) comprising at least a part of the original raw data not masked and a part of the original raw data masked according to the at least one indication of a least a part of the original raw data to mask, and
a certified correspondence data comprising a correspondence between the part of original data masked and the original raw data corresponding to the part of data masked;
- sending (S203), by the holder (20) to a verifier (30), the certified partially masked version of the data (40);
- registering (s204), by the holder (20) to the selective disclosure depositary (50), a selective disclosure function module (300) corresponding to the certified data package.

12. The method of claim 11, wherein the corresponding selective disclosure function module (300) comprises interfaces (310), a policy decision point, PDP, (320) and data assets (330).

13. A data processing system comprising means for carrying out the steps of the method according to any one of claims 1 to 12, wherein the system comprises a holder device, an issuer device, a verifier device and a selective disclosure depositary (50).

14. A computer program product comprising instructions which, when the program is executed by a computer, cause the computer to carry out the steps of the method according to any one of claims 1 to 12.

15. A computer-readable storage medium comprising instructions which, when executed by a computer, cause the computer to carry out the steps of the method according to any one of claim 1 to 12.
